# EUROPÄISCHE PATENTANMELDUNG

(11) **EP 4 844 206 A1**
(43) Veröffentlichungstag der Anmeldung: **25.11.2026**
(21) Anmeldenummer: 26177514.2
(22) Anmeldetag: 08.05.2026
(51) Int. Cl.: F02C 3/10

(54) **HELIKOPTERTRIEBWERK**

(30) Priorität: 21.05.2025 DE 102025001717
(71) Anmelder: MTU Aero Engines AG, 80995 München (DE)
(72) Erfinder: Bijewitz, Julian, 80995 München (DE); Metscher, Martin, 80995 München (DE); Trübenbach, Jens, 80995 München (DE)

(57) **Zusammenfassung**

Ein Helikoptertriebwerk weist eine Leistungsturbine zum Antreiben wenigstens eines Helikopterrotors (100) und ein Kerntriebwerk zum Antreiben der Leistungsturbine mit einem Verdichter, einer Brennkammer (30) und einer mit dem Verdichter gekoppelte Kerntriebwerksturbine auf, der Verdichter einen Axialverdichterabschnitt (20) und eine Radialverdichterstufe (27), der Axialverdichterabschnitt wenigstens fünf Axialverdichterstufen (21, 22, 23, 24, 25), die zusammen wenigstens 150 Laufschaufeln (21A-25A) aufweisen, und die Leistungsturbine wenigstens zwei Turbinenstufen (11, 12), die zusammen wenigstens 80 Laufschaufeln (11A-12A) aufweisen. Ein Quotient einer Laufschaufelanzahl der stromaufwärtigsten Turbinenstufe der Leistungsturbine dividiert durch eine Laufschaufelanzahl der stromaufwärtigsten Axialverdichterstufe des Axialverdichterabschnitts beträgt wenigstens 1,7 und/oder ein Quotient der Gesamtzahl aller Laufschaufeln der beiden stromaufwärtigsten Turbinenstufen der Leistungsturbine dividiert durch eine Gesamtzahl aller Laufschaufeln der beiden stromaufwärtigsten Axialverdichterstufen des Axialverdichterabschnitts beträgt wenigstens 1,1.

## Beschreibung

Die vorliegende Erfindung betrifft ein Helikoptertriebwerk sowie einen Helikopter mit wenigstens einem solchen Helikoptertriebwerk.

Helikoptertriebwerke müssen, insbesondere in Hinblick auf Bauraum, (Leis-tungs)Gewicht, Thermodynamik und Sicherheit, ganz spezifischen Randbedingungen genügen.

Eine Aufgabe einer Ausführung der vorliegenden Erfindung ist es, ein Helikoptertriebwerk zu verbessern.

Diese Aufgabe wird durch ein Helikoptertriebwerk mit den Merkmalen des Anspruchs 1 gelöst. Anspruch 10 stellt einen Helikopter mit einem oder mehreren hier beschriebenen Helikoptertriebwerken unter Schutz. Die Unteransprüche betreffen vorteilhafte Weiterbildungen.

Nach einer Ausführung der vorliegenden Erfindung weist ein Triebwerk, das zum Antreiben eines oder mehrerer Rotoren eines Helikopters ("Helikopterrotor(en)") eingerichtet ist bzw. verwendet wird ("Helikoptertriebwerk") bzw. wenigstens ein (Helikopter)Triebwerk eines Helikopters auf:
- eine Leistungsturbine, die zum Antreiben eines Helikopterrotors oder mehrerer Helikopterrotoren eingerichtet ist bzw. verwendet wird; und
- ein Kerntriebwerk, welches zum Antreiben der Leistungsturbine eingerichtet ist bzw. verwendet wird, insbesondere zum Zuführen von heißem Abgas zu(m Antreiben) der Leistungsturbine, die dessen Energie wenigstens teilweise in mechanische Arbeit zum Antreiben des bzw. der Helikopterrotors/-en umsetzt.

Nach einer Ausführung der vorliegenden Erfindung weist das Kerntriebwerk seinerseits auf:
- einen Verdichter;
- eine Brennkammer; und
- eine mit dem Verdichter, vorzugsweise mechanisch, gekoppelte, insbesondere durch diesen (mechanisch) antreibbare, Kerntriebwerksturbine.

Nach einer Ausführung der vorliegenden Erfindung weist der Verdichter des Kerntriebwerks seinerseits auf:
- einen Axialverdichterabschnitt, vorzugsweise ein Axialverdichtermodul bzw. einen Axialverdichter; und
- eine Radialverdichterstufe, die vorzugsweise stromabwärts nach dem Axialverdichterabschnitt angeordnet ist, vorzugsweise an den Axialverdichterabschnitt anschließt und/oder von diesem mit komprimierter Luft versorgt wird und/oder (strömungstechnisch) zwischen Axialverdichterabschnitt und Brennkammer angeordnet ist.

Nach einer Ausführung der vorliegenden Erfindung weist der Axialverdichterabschnitt wenigstens fünf Axialverdichterstufen auf.

Nach einer Ausführung der vorliegenden Erfindung weisen diese fünf Axialverdichterstufen des Axialverdichterabschnitts zusammen bzw. insgesamt wenigstens 150, in einer vorteilhaften Weiterbildung wenigstens 180 und/oder höchstens 250, in einer Ausführung höchstens 210, Laufschaufeln auf, wobei in einer vorteilhaften Weiterbildung diese fünf Axialverdichterstufen aufeinanderfolgen, in einer Ausführung paarweise über je ein Leitgitter miteinander verbunden sind, und/oder die stromaufwärtigsten fünf Axialverdichterstufen des Axialverdichterabschnitts, vorzugsweise des Kerntriebwerks, bevorzugt des Helikoptertriebwerks, bilden und/oder wenigstens zwei, insbesondere wenigstens drei, vorzugsweise wenigstens vier und bevorzugt alle fünf dieser fünf Axialverdichterstufen unterschiedliche Anzahlen von Laufschaufeln aufweisen.

Nach einer Ausführung der vorliegenden Erfindung weist die Leistungsturbine wenigstens, in einer Weiterbildung genau bzw. höchstens, zwei Turbinenstufen auf.

Nach einer Ausführung der vorliegenden Erfindung weisen diese (wenigstens, in einer Weiterbildung genau) zwei Turbinenstufen zusammen wenigstens 80, in einer vorteilhaften Weiterbildung wenigstens 95 und/oder höchstens 150, in einer Ausführung höchstens 115, Laufschaufeln auf, wobei in einer vorteilhaften Weiterbildung diese zwei Turbinenstufen aufeinanderfolgen, in einer Ausführung über ein Leitgitter miteinander verbunden sind, und/oder die stromaufwärtigsten zwei Turbinenstufen der Leistungsturbine bilden und/oder unterschiedliche Anzahlen von Laufschaufeln aufweisen.

Nach einer Ausführung der vorliegenden Erfindung beträgt ein bzw. der Quotient einer An- bzw. Gesamtzahl an Laufschaufel ("Laufschaufelanzahl") der stromaufwärtigsten Turbinenstufe der Leistungsturbine dividiert durch eine Laufschaufelanzahl der stromaufwärtigsten Axialverdichterstufe des Axialverdichterabschnitts wenigstens 1,7. In einer vorteilhaften Weiterbildung beträgt dieser Quotient (Laufschaufelanzahl der stromaufwärtigsten Leistungsturbinenstufe)/(Laufschaufelanzahl der stromaufwärtigsten Axialverdichterabschnittsstufe) wenigstens 1,8 und/oder höchstens 4,5, in einer Ausführung höchstens 4,2.

Zusätzlich oder alternativ beträgt nach einer Ausführung der vorliegenden Erfindung ein bzw. der Quotient der Gesamtzahl aller Laufschaufeln der beiden bzw. zwei stromaufwärtigsten Turbinenstufen der Leistungsturbine (d.h. der stromaufwärtigsten Turbinenstufe und der zweitstromaufwärtigsten Turbinenstufe) dividiert durch eine Gesamtzahl aller Laufschaufeln der beiden bzw. zwei stromaufwärtigsten Axialverdichterstufen des Axialverdichterabschnitts (d.h. der stromaufwärtigsten Axialverdichterstufe und der zweitstromaufwärtigsten Axialverdichterstufe) wenigstens 1,1. In einer vorteilhaften Weiterbildung beträgt dieser Quotient (Summe der Laufschaufelanzahlen der beiden stromaufwärtigsten Leistungsturbinenstufen)/(Summe der Laufschaufelanzahlen der beiden stromaufwärtigsten Axialverdichterabschnittsstufen) wenigstens 1,2 und/oder höchstens 3,2, in einer Ausführung höchstens 3,0.

In einer Ausführung weist die Leistungsturbine wenigstens, in einer Weiterbildung genau bzw. höchstens, drei Turbinenstufen auf.

In einer Weiterbildung dieser Ausführung weisen diese (wenigstens, in einer Weiterbildung genau) drei Turbinenstufen zusammen wenigstens 125, in einer vorteilhaften Weiterbildung wenigstens 160 und/oder höchstens 230, in einer Ausführung höchstens 180, Laufschaufeln auf, wobei in einer vorteilhaften Weiterbildung diese drei Turbinenstufen aufeinanderfolgen, in einer Ausführung über ein Leitgitter miteinander verbunden sind, und/oder die stromaufwärtigsten, gegebenenfalls einzigen, drei Turbinenstufen der Leistungsturbine bilden und/oder unterschiedliche Anzahlen von Laufschaufeln aufweisen.

Nach einer Ausführung dieser Weiterbildung beträgt ein bzw. der Quotient der Gesamtzahl aller Laufschaufeln dieser drei stromaufwärtigsten Turbinenstufen der Leistungsturbine dividiert durch eine Gesamtzahl aller Laufschaufeln der drei stromaufwärtigsten Axialverdichterstufen des Axialverdichterabschnitts wenigstens 1,0. In einer vorteilhaften Weiterbildung beträgt dieser Quotient (Summe der Laufschaufelanzahlen der drei stromaufwärtigsten Leistungsturbinenstufen)/(Summe der Laufschaufelanzahlen der drei stromaufwärtigsten Axialverdichterabschnittsstufen) wenigstens 1,1 und/oder höchstens 3,0, in einer Ausführung höchstens 2,8.

Es hat sich überraschend herausgestellt, dass bei solchen Axialverdichterabschnitten mit wenigstens fünf, besonders vorteilhaft genau fünf oder wenigstens, bevorzugt genau, sechs, Axialverdichterstufen mit nachgeschalteten Radialverdichterstufen und Leistungsturbinen mit einer solch hohen Laufschaufelzahl (wenigstens 80, vorzugsweise wenigstens 95, der genau oder wenigstens, in einer Weiterbildung stromaufwärtigsten, zwei Turbinenstufen, bevorzugt wenigstens 125, vorzugsweise wenigstens 160, der genau oder wenigstens, in einer Weiterbildung stromaufwärtigsten, drei Turbinenstufen) durch ein hohes Verhältnis von ((verhältnismäßig) vielen) Leistungsturbinenlaufschaufeln zu ((verhältnismäßig) wenigen) Axialverdichterabschnittslaufschaufeln in den stromaufwärtigsten ein, zwei bzw. gegebenenfalls drei Stufen eine besonders vorteilhafte Ansaugung durch bzw. Eintritt in den Axialverdichterabschnitt bewirken, die eine besonders vorteilhafte Durchströmung des Kerntriebwerks und insbesondere Energiezufuhr in der Brennkammer ermöglicht, die von den ((verhältnismäßig) vielen) stromaufwärtigen Leistungsturbinenlaufschaufeln besonders gut umgesetzt werden kann. Insbesondere kann durch die erfindungsgemäßen Merkmale ein besonders hohes Gesamtdruckverhältnis bei kompakter Bauform und geringem Gewicht erreicht werden.

Wie bereits erwähnt sind gerade fünf- oder sechsstufige Axialverdichterabschnitte strömungstechnisch und thermodynamisch besonders vorteilhaft für ein erfindungsgemäßes Helikoptertriebwerk, so dass der Axialverdichterabschnitt entsprechend in einer Ausführung wenigstens fünf und höchstens sechs Axialverdichterstufen, in einer besonders bevorzugten Weiterbildung genau fünf oder genau sechs Axialverdichterstufen, aufweist.

Es hat sich als strömungstechnisch und thermodynamisch besonders günstig herausgestellt, wenn die Kerntriebwerksturbine wenigstens und/oder höchstens zwei Stufen aufweist.

In einer Ausführung sind bei einer oder mehreren von den Axialverdichterstufen des Axialverdichterabschnitts die Laufschaufeln der (jeweiligen) Stufe (jeweils) aus einer Titanlegierung hergestellt und/oder integral miteinander ausgebildet. Bevorzugt sind eine oder mehrere der Axialverdichterstufen des Axialverdichterabschnitts als sogenannte BLISKs ("BLaded dISKs"), bevorzugt Ti-Blisks, ausgebildet. Solche Axialverdichterstufen sind für den vorliegenden Einsatzzweck und die sich durch die angegebenen Verhältnisse einstellenden strömungstechnischen und thermodynamischen Randbedingungen besonders vorteilhaft.

In einer Ausführung ist eine Leistungsturbinenabtriebswelle, die zum Antreiben eines Helikopterrotors oder mehrerer Helikopterrotoren eingerichtet ist bzw. verwendet wird, mit einem Getriebe, in einer Weiterbildung einem Übersetzungsgetriebe, gekoppelt.

Zusätzlich oder alternativ ist eine bzw. die Leistungsturbinenabtriebswelle, die zum Antreiben eines Helikopterrotors oder mehrerer Helikopterrotoren eingerichtet ist bzw. verwendet wird, durch einen (entsprechend hohl ausgebildeten) Rotor des Kerntriebwerks geführt bzw. durchgreift diesen Rotor, wobei dieser Rotor in einer Ausführung mit dem Axialverdichterabschnitt bzw. dessen Laufschaufeln und/oder der Radialverdichterstufe und/oder der Kerntriebwerksturbine gekoppelt ist bzw. diese mechanisch miteinander koppelt bzw. verbindet.

Gerade für erfindungsgemäße Helikoptertriebwerke mit Axialverdichterabschnitten mit wenigstens fünf, besonders vorteilhaft genau fünf oder wenigstens, bevorzugt genau, sechs, Axialverdichterstufen mit nachgeschalteten Radialverdichterstufen und Leistungsturbinen mit den erfindungsgemäßen Laufschaufelzahl(verhältniss)en sind solche Getriebe bzw. Leistungsturbinenabtriebswellen mit entsprechend angeordneten Leistungsturbinen mechanisch und bauraumtechnisch besonders günstig.

In einer Ausführung, in welcher der Axialverdichterabschnitt vorzugsweise genau fünf oder genau sechs Axialverdichterstufen aufweist, beträgt ein(e), insbesondere offene(r) bzw. durchströmbare(r), (Eintritts)Querschnitt(sfläche) eines Strömungskanals, vorzugsweise Ringraums, ("Strömungskanalquerschnitt") einer einlassseitigen bzw. einlassnächsten Axialverdichterstufe des Axialverdichterabschnitts an einer (axialen Position einer) Vorderkante wenigstens einer Laufschaufel dieser Axialverdichterstufe wenigstens 0,04 m² und höchstens 0,07 m². In einer Ausführung wird dieser (Querschnitt des) Strömungskanal(s) bzw. Ringraum(s), insbesondere radial außen, durch eine Innenwandung eines Gehäuses des Kerntriebwerks und/oder, insbesondere radial innen, durch eine (Innenplattform) der Laufschaufeln dieser Axialverdichterstufe begrenzt. Zusätzlich oder alternativ weist in einer Ausführung eine bzw. diese einlassseitige bzw. einlassnächste Axialverdichterstufe des Axialverdichterabschnitts wenigstens 10 und/oder höchstens 25 Laufschaufeln auf.

Es hat sich überraschend herausgestellt, dass bei solchen fünf- oder sechsstufigen Axialverdichterabschnitten mit nachgeschalteten Radialverdichterstufen und Leistungsturbinen und ganz besonders mit einlassseitigen bzw. -nächsten Axialverdichterstufen mit wenigstens 10 und/oder höchstens 25 Laufschaufeln ein erfindungsgemäßer Strömungskanal(eintritts)querschnitt aufgrund seiner Untergrenze von wenigstens 0,04 m² und seiner Obergrenze von höchstens 0,07 m² eine besonders vorteilhafte Ansaugung durch bzw. Eintritt in den Axialverdichterabschnitt bewirkt. Insbesondere kann durch den erfindungsgemäßen Strömungskanal(eintritts)querschnitt in Verbindung mit dem fünf- oder sechsstufigen Axialverdichterabschnitt, vorzugsweise seiner einlassseitigen bzw. -nächsten Axialverdichterstufe mit wenigstens 10 und/oder höchstens 25 Laufschaufeln, eine besonders hohe Effizienz spezifische Leistung bei kompakter Bauform und geringem Gewicht erreicht werden.

In einer Ausführung ist die Brennkammer eine Gleichstrombrennkammer, vorzugsweise mit axialer (Durch)Strömung. In einer Ausführung ist die Brennkammer eine Umkehrbrennkammer, in der der Gasstrom seine Richtung vorzugsweise wenigstens zweimal außerhalb der Verbrennungszone um wenigstens 180° ändert, wodurch eine gute Durchmischung und eine gleichförmige Temperatur am Austritt erreicht und die Baulänge reduziert werden kann, während andererseits die Gleichstrombrennkammer vorteilhaft niedrige(re) Druckverluste aufweist.

"Stromaufwärtig(st)" bezieht sich insbesondere auf eine Durchströmung(s)richtung des Kerntriebwerks und der Leistungsturbine, vorzugsweise von einem (stromaufwärtigen) Einlass des Kerntriebwerks und/oder zu einem (stromabwärtigen) Auslass der Leistungsturbine. "Zwei stromaufwärtigste" kann auch als "stromaufwärtigste zwei" gelesen werden und bezeichnet eine Gesamtheit aus einem stromaufwärtigsten und einem diesem stromabwärts folgenden bzw. zweit-stromaufwärtigsten, wobei "zwei" durch andere Zahlen ersetzt sein kann und entsprechend beispielsweise "drei stromaufwärtigste" eine Gesamtheit aus einem stromaufwärtigsten, einem diesem stromabwärts folgenden bzw. zweit-stromaufwärtigsten und einem diesem wiederrum stromabwärts folgenden bzw. dritt-stromaufwärtigsten bezeichnet. "Axial" bezieht sich insbesondere auf eine Rotations- bzw. (Haupt)Maschinenachse des Kerntriebwerks und/oder der Leistungsturbine, "radial" insbesondere auf eine Richtung senkrecht zu dieser Achse und einer Umfangsrichtung, vorzugsweise von dieser Achse weg. "Einlassseitig" bzw. "einlassnächst" bezieht sich insbesondere auf einen (Haupt- und/oder Luft)Einlass des Kerntriebwerks und/oder Helikoptertriebwerks und bezeichnet vorzugsweise ein in Durchströmung(s)richtung des Kerntriebwerks erstes bzw. vorderstes.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

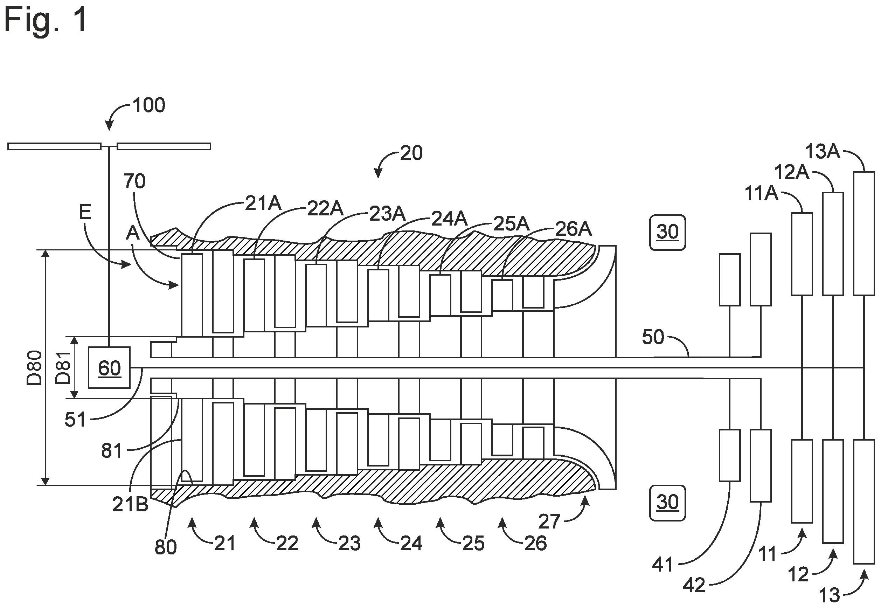

- Fig. 1: einen Teil eines Helikopters mit einem Helikoptertriebwerk nach einer Ausführung der vorliegenden Erfindung.

Fig. 1 zeigt einen Teil eines Helikopters mit einem Helikoptertriebwerk nach einer Ausführung der vorliegenden Erfindung.

Das Helikoptertriebwerk weist eine Leistungsturbine mit drei Turbinenstufen 11, 12, 13 zum Antreiben wenigstens eines Helikopterrotors 100 und ein Kerntriebwerk zum Antreiben der Leistungsturbine auf, wobei das Kerntriebwerk seinerseits einen Verdichter mit einem Axialverdichterabschnitt 20 mit sechs Axialverdichterstufen 21-26 und einer Radialverdichterstufe 27, eine Brennkammer 30 und eine mit dem Verdichter 21-27 gekoppelte Kerntriebwerksturbine mit zwei Stufen 41, 42 aufweist. Mit E ist ein Einlass des Kerntriebwerks angedeutet.

Die fünf stromaufwärtigsten Axialverdichterstufen 21-25 des Axialverdichterabschnitts 20 weisen zusammen zwischen 190 und 200 Laufschaufeln 21A-25A auf, wobei Laufschaufeln der stromabwärtigsten Axialverdichterstufe 26 des Axialverdichterabschnitts mit 26A bezeichnet sind. In einer Abwandlung kann diese stromabwärtigste bzw. sechste Axialverdichterstufe 26 auch entfallen.

Die drei Turbinenstufen 11-13 der Leistungsturbine weisen zusammen zwischen 160 und 170 Laufschaufeln auf. Die beiden (stromaufwärtigsten) Leistungsturbinenstufen 11, 12 weisen zusammen zwischen 100 und 110 Laufschaufeln auf. In einer Abwandlung kann die stromabwärtigste bzw. dritte Leistungsturbinenstufe 13 auch entfallen.

Ein Quotient der Laufschaufelanzahl N₁₁ der stromaufwärtigsten Turbinenstufe 11 der Leistungsturbine dividiert durch eine Laufschaufelanzahl N₂₁ der stromaufwärtigsten Axialverdichterstufe des Axialverdichterabschnitts beträgt zwischen 2,5 und 3,0 (2,5 ≤ N₁₁/N₂₁ ≤ 3,0). Ein Quotient der Gesamtzahl N₁₁, ₁₂ (= N₁₁ + N₁₂) aller Laufschaufeln 11A, 12A der zwei stromaufwärtigsten Turbinenstufen 11, 12 der Leistungsturbine dividiert durch eine Gesamtzahl N₂₁, ₂₂ (= N₂₁ + N₂₂) aller Laufschaufeln 21A, 22B der zwei stromaufwärtigsten Axialverdichterstufen 21, 22 des Axialverdichterabschnitts beträgt zwischen 1,6 und 2,0 (1,6 ≤ N_{11, 12}/ N_{21, 22} ≤ 2,0). Ein Quotient der Gesamtzahl N₁₁, ₁₂, ₁₃ (= N₁₁ + N₁₂ + N₁₃) aller Laufschaufeln 11A, 12A, 13A der drei (stromaufwärtigsten) Turbinenstufen 11, 12, 13 der Leistungsturbine dividiert durch eine Gesamtzahl N₂₁, ₂₂, ₂₃ (= N₂₁ + N₂₂ + N₂₃) aller Laufschaufeln 21A, 22A, 23A der drei stromaufwärtigsten Axialverdichterstufen des Axialverdichterabschnitts beträgt zwischen 1,5 und 1,9 (1,5 ≤ N_{11, 12, 13}/ N_{21, 22, 23} ≤ 1,9).

Eine Leistungsturbinenabtriebswelle 51 zum Antreiben des wenigstens einen Helikopterrotors 100 ist durch einen Rotor 50 des Kerntriebwerks geführt und mit einem Getriebe 60 gekoppelt.

Ein(e Fläche eines) (offener/-n bzw. durchströmbarer/-n) (Eintritts)Querschnitt(s) A eines Strömungskanals bzw. Ringraums 70 der einlassseitigen bzw. einlassnächsten Axialverdichterstufe 21 des Axialverdichterabschnitts 20 bzw. Kerntriebwerks bzw. Helikoptertriebwerks an einer (axialen Position einer) Vorderkante 21B der Laufschaufeln 21A dieser Axialverdichterstufe 21 beträgt wenigstens 0,04 m² und höchstens 0,07 m². Dieser (Querschnitt A des) Strömungskanal(s) bzw. Ringraum(s) 70 wird radial außen durch eine Innenwandung 80 eines Gehäuses des Kerntriebwerks und radial innen durch eine Innenplattform 81 der Laufschaufeln 21A dieser Axialverdichterstufe 21 begrenzt. Wenn beispielsweise die Innenwandung 80 an der (axialen Position einer) Vorderkante 21B der Laufschaufeln 21A eine Kreiskontur mit dem Durchmesser D80 und die Innenplattform 81 der Laufschaufeln 21A eine Kreiskontur mit dem Durchmesser D81 aufweist, wie in Fig. 1 angedeutet, so beträgt der bzw. die Strömungskanalquerschnitt(sfläche) A = (D80² - D81²)/(4π).

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 11, 12, 13: Leistungsturbinenstufe
- 11A, 12A, 13A: Laufschaufel
- 20: Axialverdichterabschnitt
- 21-26: Axialverdichterstufe
- 21A-26A: Laufschaufel
- 21B: Vorderkante
- 27: Radialverdichterstufe
- 30: Brennkammer
- 41, 42: Kerntriebwerksturbinenstufe
- 50: Kerntriebwerksrotor
- 51: Leistungsturbinenabtriebswelle
- 60: Getriebe
- 70: Strömungskanal
- 80: Innenwandung
- D80: Durchmesser
- 81: Innenplattform
- D81: Durchmesser
- 100: Helikopterrotor

- A: Strömungskanalquerschnitt
- E: Kerntriebwerkseinlass

## Patentansprüche

1. Helikoptertriebwerk, das
eine Leistungsturbine zum Antreiben wenigstens eines Helikopterrotors (100); und
ein Kerntriebwerk zum Antreiben der Leistungsturbine aufweist;
wobei das Kerntriebwerk
einen Verdichter;
eine Brennkammer (30); und
eine mit dem Verdichter gekoppelte Kerntriebwerksturbine aufweist;
wobei der Verdichter
einen Axialverdichterabschnitt (20); und
eine Radialverdichterstufe (27) aufweist;
wobei
der Axialverdichterabschnitt wenigstens fünf Axialverdichterstufen (21, 22, 23, 24, 25), die zusammen wenigstens 150 Laufschaufeln (21A-25A) aufweisen; und
die Leistungsturbine wenigstens zwei Turbinenstufen (11, 12), die zusammen wenigstens 80 Laufschaufeln (11A-12A) aufweisen, aufweist; und
ein Quotient einer Laufschaufelanzahl der stromaufwärtigsten Turbinenstufe der Leistungsturbine dividiert durch eine Laufschaufelanzahl der stromaufwärtigsten Axialverdichterstufe des Axialverdichterabschnitts wenigstens 1,7 und/oder ein Quotient der Gesamtzahl aller Laufschaufeln der beiden stromaufwärtigsten Turbinenstufen der Leistungsturbine dividiert durch eine Gesamtzahl aller Laufschaufeln der beiden stromaufwärtigsten Axialverdichterstufen des Axialverdichterabschnitts wenigstens 1,1 beträgt.

2. Helikoptertriebwerk nach Anspruch 1, **dadurch gekennzeichnet, dass** die Leistungsturbine wenigstens drei Turbinenstufen (11, 12, 13) aufweist, die zusammen wenigstens 125 Laufschaufeln (11A-13A) aufweisen.

3. Helikoptertriebwerk nach dem vorhergehenden Anspruch, **dadurch gekennzeichnet, dass** ein Quotient der Gesamtzahl aller Laufschaufeln der drei stromaufwärtigsten Turbinenstufen der Leistungsturbine dividiert durch eine Gesamtzahl aller Laufschaufeln der drei stromaufwärtigsten Axialverdichterstufen des Axialverdichterabschnitts wenigstens 1,0 beträgt.

4. Helikoptertriebwerk nach einem der vorhergehenden Ansprüche, **dadurch gekennzeichnet, dass** der Axialverdichterabschnitt höchstens sechs Axialverdichterstufen (21, 22, 23, 24, 25, 26) aufweist.

5. Helikoptertriebwerk nach einem der vorhergehenden Ansprüche, **dadurch gekennzeichnet, dass** die Kerntriebwerksturbine wenigstens und/oder höchstens zwei Stufen (41, 42) aufweist.

6. Helikoptertriebwerk nach einem der vorhergehenden Ansprüche, **dadurch gekennzeichnet, dass** bei wenigstens einer der Axialverdichterstufen deren Laufschaufeln aus einer Titanlegierung hergestellt und/oder integral miteinander ausgebildet sind.

7. Helikoptertriebwerk nach einem der vorhergehenden Ansprüche, **dadurch gekennzeichnet, dass** eine Leistungsturbinenabtriebswelle (51) zum Antreiben des wenigstens einen Helikopterrotors mit einem Getriebe (60) gekoppelt und/oder durch einen Rotor (50) des Kerntriebwerks geführt ist.

8. Helikoptertriebwerk nach einem der vorhergehenden Ansprüche, **dadurch gekennzeichnet, dass** ein Strömungskanalquerschnitt (A) einer einlassseitigen Axialverdichterstufe (21) des Axialverdichterabschnitts (20) an einer Vorderkante (21B) wenigstens einer Laufschaufel (21A) dieser Axialverdichterstufe (21) wenigstens 0,04 m² und höchstens 0,07 m² beträgt und/oder eine einlassseitige Axialverdichterstufe (21) des Axialverdichterabschnitts (20) wenigstens 10 und/oder höchstens 25 Laufschaufeln aufweist.

9. Helikoptertriebwerk nach einem der vorhergehenden Ansprüche, **dadurch gekennzeichnet, dass** die Brennkammer eine Gleichstrombrennkammer oder Umkehrbrennkammer ist.

10. Helikopter mit wenigstens einem Helikoptertriebwerk nach einem der vorhergehenden Ansprüche.
